# EUROPEAN PATENT APPLICATION

(11) **EP 4 235 355 A1**
(43) Date of publication of application: **30.08.2023**
(21) Application number: 21898661.0
(22) Date of filing: 26.11.2021
(51) Int. Cl.: G06F 1/16, H04M 1/02, G09F 9/30

(54) **ELECTRONIC DEVICE INCLUDING SLIDABLE DISPLAY**

(30) Priority: 26.11.2020 KR 20200161460; 24.05.2021 KR 20210066412
(71) Applicant: Samsung Electronics Co., Ltd., Suwon-si, Gyeonggi-do 16677 (KR)
(72) Inventor: LEE, Jeongyeol, Suwon-si Gyeonggi-do 16677 (KR); LEE, Kyeongeun, Suwon-si Gyeonggi-do 16677 (KR); KIM, Manho, Suwon-si Gyeonggi-do 16677 (KR); LEE, Kihuk, Suwon-si Gyeonggi-do 16677 (KR); JUNG, Hwajoong, Suwon-si Gyeonggi-do 16677 (KR)
(74) Representative: HGF
(86) International application number: PCT/KR2021/017592
(87) International publication number: WO 2022/114836

(57) **Abstract**

An electronic device according to various embodiments disclosed herein comprises: a flexible display including a first housing, a second housing accommodating at least a portion of the first housing and configured to guide the sliding movement of the first housing, a first display region disposed on the first housing, and a second display region extending to the first display region, wherein the second display region is configured so as to be capable of moving into or out of the second housing on the basis of the sliding movement of the first housing; and a first component assembly of at least a portion is mounted inside the first housing and which includes a lens assembly formed so as to move in a direction perpendicular to the direction of the sliding movement of the first housing in response to the sliding movement. Various other embodiments are also possible.

## Description

### [Technical Field]

Various embodiments of the disclosure relate to an electronic device including a slidable display.

### [Background Art]

As the demand for mobile communication increases and the degree of integration of electronic devices increases, the portability of electronic devices such as mobile communication terminals may be improved and convenience in using multimedia functions and the like may be improved. For example, displays having an integrated touch screen function may replace traditional mechanical (button type) keypads, thereby the electronic device may be miniaturized while maintaining the function of an input device. For example, the mechanical keypad may be removed from the electronic device, thereby improving the portability of the electronic device. In another embodiment, if a display of an electronic device including a touch screen function is extended by the area where the mechanical keypad is removed, it may provide a larger screen than an electronic device including a mechanical keypad even if it has the same size and weight as the electronic device including the mechanical keypad.

When a user uses a web surfing or multimedia function, it may be more convenient to use an electronic device that provides a large screen. Although it is possible to mount a larger display to the electronic device to output a large screen, there may be restrictions on expanding the size of the display in consideration of the portability of the electronic device. In an embodiment, a display using an organic light-emitting diode or the like may secure the portability of an electronic device while providing a large screen. For example, a display using an organic light-emitting diode (or an electronic device equipped therewith) may implement stable operation even if it is manufactured very thin, and thus it may be mounted in a foldable or bendable form or in a rollable form to the electronic device. Here, the rollable electronic device may include a rolling type electronic device in which a display is rolled along a guide member such as a roller, and a sliding type electronic device in which a display is slidable. A display using an organic light-emitting diode may be mounted in a foldable, slidable, or rollable form to an electronic device, thereby providing a user with an electronic device that provides a larger screen.

### [Detailed Description of the Invention]

### [Technical Problem]

An electronic device (e.g., a laptop) includes a display in the form of a flat or flat and curved surfaces. An electronic device including a display may have limitations in realizing a screen larger than the size of the electronic device due to a fixed structure of the display. Therefore, electronic devices including a slidable display are being studied.

Since an electronic device including a slidable display is provided in a scroll type, it is difficult to implement a larger display than a display that is not a rollable display, thereby reducing user convenience.

According to various embodiments of the disclosure, an electronic device including a slidable display capable of maximizing display expansion may be provided.

According to an embodiment of the disclosure, an electronic device configured to control a camera application to be forcibly terminated when a module is changed due to expansion or reduction of a display by an external force may be provided.

According to various embodiments of the disclosure, a structure capable of extending (or changing) a range of lengths in which a display of a rollable electronic device is extended or reduced will be provided.

However, the problem to be solved in the disclosure is not limited to the above-mentioned problems and may be expanded in various ways without departing from the spirit and scope of the disclosure.

### [Technical Solution]

An electronic device according to various embodiments of the disclosure may include a first housing, a second housing configured to receive at least a portion of the first housing and guide sliding movement of the first housing, a flexible display including a first display region disposed in the first housing and a second display region extending to the first display region, the second display region configured to move to the inside or outside of the second housing, based on the sliding movement of the first housing, and a first component assembly at least partially mounted inside the first housing and including a lens assembly configured to move in a direction perpendicular to the sliding movement direction in response to the sliding movement of the first housing.

An electronic device according to various embodiments of the disclosure may include a first housing, a second housing configured to receive at least a portion of the first housing and guide sliding movement of the first housing, a flexible display including a first display region disposed in the first housing and a second display region extending to the first display region, the second display region configured to move to the inside or outside of the second housing, based on the sliding movement of the first housing, and a first component assembly at least partially mounted inside the first housing and including a lens assembly and an image sensor, wherein the lens assembly may include at least one reflective member, and a first lens group, a second lens group, and a third lens group arranged in sequence toward the image sensor, and wherein the second lens group and the third lens group may be configured to slide relative to the first lens group.

### [Advantageous Effects]

According to a device according to various embodiments of the disclosure, it is possible to provide a structure capable of extending (or changing) a range of lengths in which a display of a rollable electronic device is extended or reduced.

Effects obtainable from the disclosure are not limited to the effects mentioned above, and other effects not mentioned may be clearly understood by those skilled in the art from the description below.

### [Brief Description of Drawings]

FIG. 1 is a block diagram of an electronic device in a network environment according to various embodiments of the disclosure.
FIG. 2 is a diagram illustrating an electronic device according to various embodiments disclosed in this document in the state in which a portion of a flexible display is received inside a second structure.
FIG. 3 is a diagram illustrating an electronic device according to various embodiments disclosed in this document in the state in which most of a flexible display is exposed to the outside of a second structure.
FIG. 4 is an exploded perspective view illustrating an electronic device according to various embodiments disclosed in this document.
FIG. 5 is a diagram showing the behavior of a display in a slide-in operation and a slide-out operation of a first structure according to various embodiments of the disclosure.
FIGS. 6A, 6B, and 6C to 6D are diagrams illustrating the state of an electronic device in a slide-in operation and a slide-out operation of a first structure, when viewed in one direction, according to various embodiments of the disclosure.
FIGS. 7A to 7B are enlarged schematic diagrams of electrical components in FIGS. 6A, 6B, and 6C to 6D according to various embodiments.
FIGS. 8A and 8B are diagrams illustrating various methods of transforming at least a portion of the electrical component (e.g., a pop-up operation) in FIGS. 7A and 7B.
FIG. 9 illustrates a lens assembly used in a third method among the methods of transforming an electrical component (e.g., a pop-up operation).

### [Mode for Carrying out the Invention]

Hereinafter, various embodiments of this document will be described with reference to the accompanying drawings.

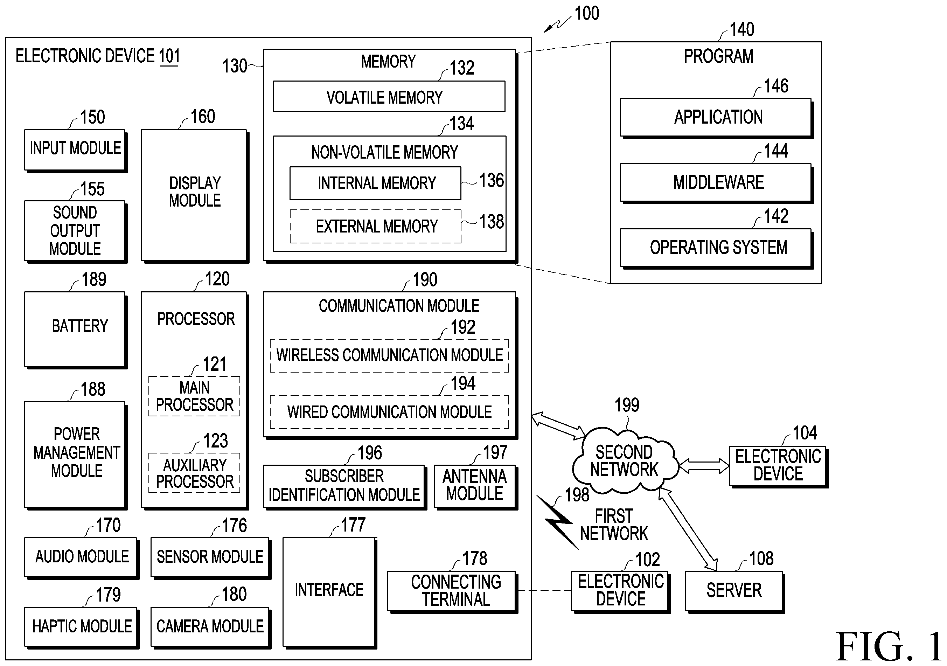

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

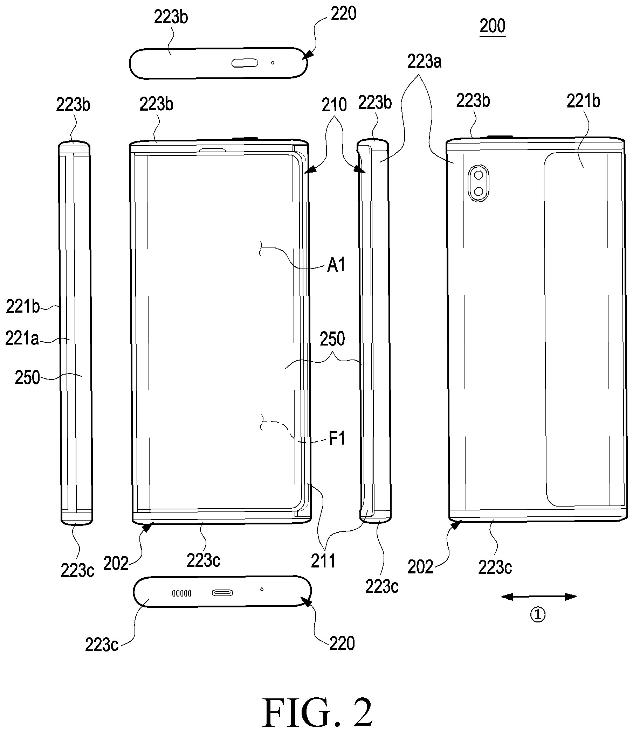

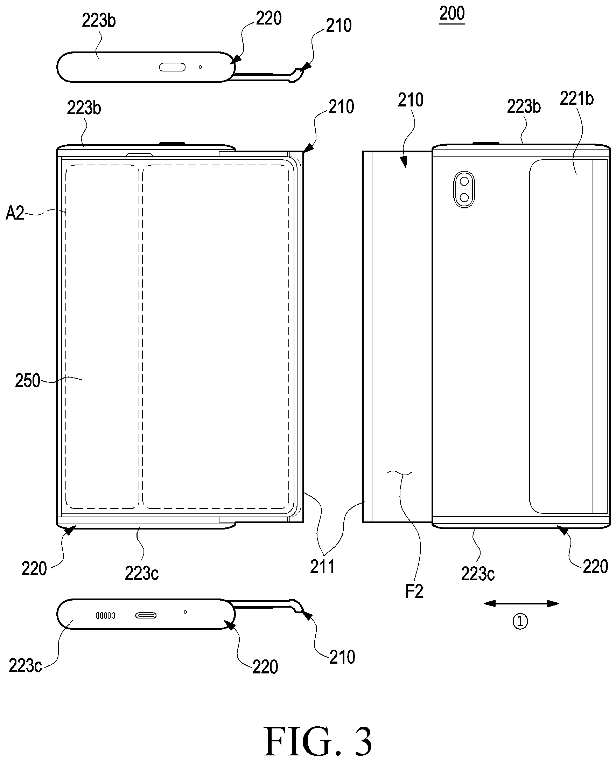

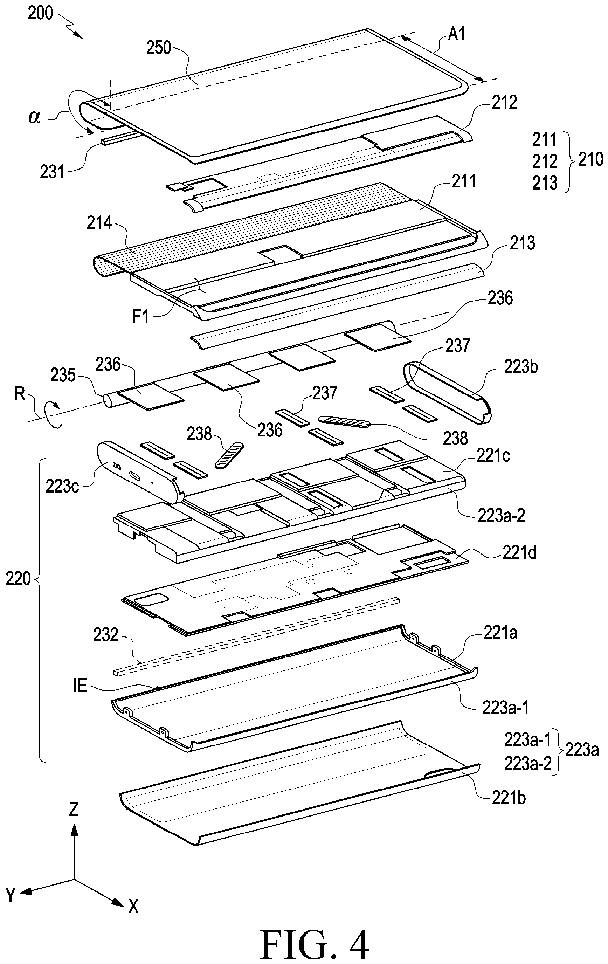

FIG. 2 is a diagram illustrating an electronic device 200 according to various embodiments disclosed in this document in the state in which a portion (e.g., an alpha area α; see FIG. 4) of a display 250 (e.g., a flexible display) is received inside a second structure 220. FIG. 3 is a diagram illustrating an electronic device according to various embodiments disclosed in this document in the state in which most of a display 250 is exposed to the outside of a second structure 220.

The electronic device 200 in FIGS. 2 and 3 is an example of the electronic device 101 shown in FIG. 1, and may be a rollable electronic device. The rollable electronic device may include a rolling type electronic device in which a display is rolled along a guide member such as a roller and a sliding type electronic device in which a display is slidable. It should be noted that the following embodiments will be described based on a sliding type electronic device and that the following description may be applied to other types of rollable electronic devices (e.g., a rolling type electronic device) unless stated otherwise.

The state shown in FIG. 2 may be defined as a state in which a first structure 210 is closed with respect to a second structure 220, and the state shown in FIG. 3 may be defined as a state in which the first structure 210 is open with respect to the second structure 220. According to an embodiment, the "closed state" or "open state" may be defined as a state in which an electronic device is closed or open. According to an embodiment, the closed state of the electronic device 200 may be defined as a state in which the width of a slidable housing of the electronic device 200 is minimized, and the open state of the electronic device may be defined as a state in which the width of a slidable housing of the electronic device 200 is maximized. According to another embodiment, the closed state of the electronic device 200 may be defined as a state in which the area of a portion of the display 250 exposed to the outside is minimized, and the open state of the electronic device may be defined as a state in which the area of a portion of the display 250 exposed to the outside is maximized.

Referring to both FIG. 2 and FIG. 3, the electronic device 200 may include a first structure 210 and a second structure 220 movably disposed in the first structure 210. In some embodiments, the electronic device 200 may be interpreted as a structure in which the first structure 210 is able to slide on the second structure 220. According to an embodiment, the first structure 210 may be disposed to reciprocate relative to the second structure 220 by a predetermined distance in a shown direction, for example, in a direction indicated by an arrow ①.

According to various embodiments, the first structure 210 may be referred to as, for example, a first housing structure, a slide part, or a slide housing and may be disposed to reciprocate on the second structure 220. In an embodiment, the second structure 220 may be referred to as, for example, a second housing structure, a main part, or a main housing and may accommodate various electric and electronic components such as a main circuit board or a battery. A portion (e.g., a first area A1) of the display 250 may be seated on the first structure 210. According to an embodiment, as the first structure 210 moves (e.g., sliding movement) relative to the second structure 220, another portion (e.g., a second area A2) of the display 250 may be received inside the second structure 220 (e.g., a slide-in operation) or exposed to the outside of the second structure 220 (e.g., a slide-out operation). Here, a portion (e.g., the first area A1) of the display 250 may be a default use area in a slide-in state of the display 250, and another portion (e.g., the second area A2) of the display 250 may be an extended area in a slide-out state thereof.

The embodiment shown in FIGS. 2 and 3 illustrates that the default use area (e.g., the first area A1) is seated on the first structure 210 in the slide-in state of the display 250. In addition, it is illustrated, according to the embodiment shown in FIG. 3, that the default use area (e.g., the first area A1) is formed on the right side to which the display 250 is extended and that the extended area (e.g., the second area A2) is formed on the left side of the display 250 in the slide-out state of the display 250. However, the disclosure is not necessarily limited thereto, and unlike the configuration shown in FIG. 3, in the slide-out state of the display 250, the default use area (e.g., the first area A1) may be formed on the left side opposite the direction in which the display 250 is extended and the extended area (e.g., the second area A2) may be formed on the right side of the display 250.

According to various embodiments, the first structure 210 may include a first plate 211 (e.g., a slide plate), and include a first face F1 formed to include at least a portion of the first plate 211 and a second face F2 facing in the opposite direction of the first face F1. According to an embodiment, the second structure 220 may include a second plate 221a (e.g., a rear case), a first sidewall 223a extending from the second plate 221a, a second sidewall 223b extending from the first sidewall 223a and the second plate 221a, a third sidewall 223c extending from the first sidewall 223a and the second plate 221a and parallel to the second sidewall 223b, and/or a rear plate 221b (e.g., a rear window). In some embodiments, the second sidewall 223b and the third sidewall 223c may be formed substantially perpendicular to the first sidewall 223a. According to an embodiment, the second plate 221a, the first sidewall 223a, the second sidewall 223b, and the third sidewall 223c may be formed to be open at one side (e.g., a front face) thereof in order to accommodate (or surround) at least a portion of the first structure 210. For example, the first structure 210 may be coupled to the second structure 220 while being at least partially surrounded by the same and may slide by being guided by the second structure 220 in a direction parallel to the first face F1 (e.g., a front face) or the second face F2 (e.g., a rear face), for example, in the direction of arrow ①.

According to various embodiments, the second sidewall 223b or the third sidewall 223c may be omitted. According to an embodiment, the second plate 221a, the first sidewall 223a, the second sidewall 223b, and/or the third sidewall 223c may be formed as separate structures and then coupled or assembled. The rear plate 221b may be coupled to surround at least a portion of the second plate 221a. In another embodiment, the rear plate 221b may be formed to be substantially integral with the second plate 221a. According to an embodiment, the second plate 221a or the rear plate 221b may cover at least a portion of the display 250. For example, the display 250 may be at least partially received inside the second structure 220, and the second plate 221a or the rear plate 221b may cover a portion of the display 250 received inside the second structure 220.

According to various embodiments, the first structure 210 may move relative to the second structure 220 between an open state and a closed state in a first direction (e.g., the direction ①) and may move such that the first structure 210 is positioned at a first distance from the first sidewall 223a in the closed state and positioned at a second distance greater than the first distance from the first sidewall 223a in the open state. In some embodiments, the first structure 210 may be positioned to surround a portion of the first sidewall 223a in the closed state.

According to various embodiments, unlike the above-described embodiments, the first sidewall 223a may move integrally with the first structure 210. The second structure 220 may include a fourth sidewall (not shown) positioned in the opposite direction of the first sidewall 223a, and a configuration in which the first sidewall 223a moves away from the fourth sidewall (not shown) in line with the movement of the first structure 210 in the state where the fourth sidewall (not shown) is fixed may be applied thereto. In addition, expansion of the slidable housing according to the sliding movement of the first structure 210 may vary according to embodiments.

According to various embodiments, the electronic device 200 may include a display 250, a key input device, a connector hole, an audio module, or a camera module. Although not shown, the electronic device 200 may further include an indicator (e.g., an LED device) or various sensor modules. Here, the display 250 may be connected to a touch sensing circuit, a pressure sensor capable of measuring the intensity (pressure) of a touch, and/or a digitizer detecting a magnetic-field type stylus pen or may be disposed adjacent thereto.

According to various embodiments, the display 250 may include a first area A1 and a second area A2. In an embodiment, the first area A1 may be disposed on the first face F1 so as to extend substantially across at least a portion of the first plate 211. The second area A2 may extend from the first area A1 and may be inserted or received inside the second structure 220 (e.g., the main housing) or exposed to the outside of the second structure 220 according to the sliding movement of the first structure 210. As will be described later, the second area A2 may move while being substantially guided by a guide member (e.g., a roller) mounted to the second structure 220 so as to be received inside the second structure 220 or exposed to the outside thereof. For example, while the first structure 210 slides, a portion of the second area A2 may be deformed into a curved shape at a position corresponding to the guide member. According to various embodiments, if the first structure 210 moves from the closed state to the open state, the second area A2 may be gradually exposed to the outside of the second structure 220 to form substantially a plane together with the first area A1 when viewed from above of the first plate 211 (e.g., the slide plate). In some embodiments, the second area A2 may be at least partially received inside the second structure 220, and a portion of the second area A2 may be exposed to the outside even in the state shown in FIG. 2 (e.g., the closed state). In some embodiments, a portion of the exposed second area A2 may be positioned on the guide member (not shown), irrespective of the closed state or open state, so that a portion of the second area A2 may maintain a curved shape at a position corresponding to the guide member (not shown). In the embodiment shown in FIGS. 2 and 3, an embodiment in which the guide member is disposed on the side opposite the direction in which the display of the electronic device 200 is extended is shown, but the disclosure is not necessarily limited thereto, and alternatively, an embodiment in which the guide member is disposed in a direction in which the display of the electronic device 200 is extended may also be applied.

FIG. 4 is an exploded perspective view illustrating an electronic device 200 according to various embodiments disclosed in this document.

FIG. 4 and drawings subsequent thereto show a spatial coordinate system defined by the X-axis, the Y-axis, and the Z-axis orthogonal to each other. Here, the X-axis may represent a width direction of the electronic device, the Y-axis may represent a length direction of the electronic device, and the Z-axis may represent a height (or thickness) direction of the electronic device.

Referring to FIG. 4, the electronic device 200 may include a first structure 210, a second structure 220 (e.g., a main housing), a display 250 (e.g., a flexible display), a guide member (e.g., a roller 235), a support sheet 236, and/or a multi-joint hinge structure 214. A portion (e.g., an alpha area α) of the display 250 may be received inside the second structure 220 while being guided by the roller 235.

According to various embodiments, the first structure 210 may include a first plate 211 (e.g., a slide plate), and a first bracket 212 and/or a second bracket 213 mounted to the first plate 211. The first structure 210, for example, the first plate 211, the first bracket 212, and/or the second bracket 213 may be formed of a metal material and/or a non-metal (e.g., polymer) material. The first structure 210 may be mounted to the second structure 220 (e.g., the main housing) and linearly reciprocate in one direction (e.g., in the direction of arrow ① in FIG. 2 or 3) while being guided by the second structure 220. For example, the first plate 211 may be received or inserted into a groove (not shown) of the second structure 220 using the second bracket 213. In an embodiment, the first bracket 212 may be coupled to the first plate 211 to form a first face F 1 of the first structure 210 together with the first plate 211. The first area A1 of the display 250 may be substantially mounted on the first face F1 and remain in a flat shape. The second bracket 213 may be coupled to the first plate 211 to form a second face (e.g., the second face F2 in FIG. 3) of the first structure 210 together with the first plate 211. According to an embodiment, the first bracket 212 and/or the second bracket 213 may be integrally formed with the first plate 211. This may be appropriately designed in consideration of the assembly structure of a manufactured product or manufacturing processes thereof. The first structure 210 or the first plate 211 may be coupled to the second structure 220 and slide relative to the second structure 220.

According to various embodiments, the multi-joint hinge structure 214 may include a plurality of bars or rods (not shown) and may be connected to one end of the first structure 210. For example, as the first structure 210 slides, the multi-joint hinge structure 214 may move relative to the second structure 220 to be substantially received inside the second structure 220 in the closed state (e.g., the state shown in FIG. 2). In some embodiments, even in the closed state, a part of the multi-joint hinge structure 214 may not be received inside the second structure 220. For example, even in the closed state, a part of the multi-joint hinge structure 214 may be positioned outside the second structure 220 so as to correspond to the roller 235. The plurality of rods (not shown) may extend in a straight line to be disposed parallel to a rotation axis R of the roller 235, and may be arranged along a direction perpendicular to the rotation axis R, for example, in a direction in which the first structure 210 slides.

Accordingly, as the first structure 210 slides, the plurality of rods 315 may be arranged to form a curved shape or may be arranged to form a flat shape. For example, as the first structure 210 slides, the multi-joint hinge structure 214 may form a curved surface at a portion facing the roller 235 and form a flat surface at a portion not facing the roller 235. In an embodiment, a portion (e.g., the alpha area α) of the display 250 may be mounted to or supported by the multi-joint hinge structure 214 and may be exposed to the outside of the second structure 220 together with the first area A1 in the open state (e.g., the state shown in FIG. 2). In the state in which the second area (e.g., the second area A2 in FIG. 2) is exposed to the outside of the second structure 220, the multi-joint hinge structure 214 may form substantially a flat surface, thereby supporting or maintaining the second area (e.g., the second area A2 in FIG. 2) in a flat state.

According to various embodiments, the second structure 220 (e.g., the main housing) may include a second plate 221a (e.g., a rear case), a printed circuit board (not shown), a rear plate 221b, and a third plate 221c (e.g., a front case), and/or a support member 221d. The second plate 221a, for example, the rear case, may be disposed to face in the opposite direction of the first face F 1 of the first plate 211 and may substantially provide the appearance of the second structure 220 or the electronic device 200. In an embodiment, the second structure 220 may include a first sidewall 223a extending from the second plate 221a, a second sidewall 223b extending from the second plate 221a to be substantially perpendicular to the first sidewall 223a, and a third sidewall 223c extending from the second plate 221a to be substantially perpendicular to the first sidewall 223a and parallel to the second sidewall 223b. Although the illustrated embodiment shows that the second sidewall 223b and the third sidewall 223c are manufactured as separate parts from the second plate 221a and then mounted or assembled to the second plate 221a, they may be integrally formed with the second plates 221a. The second structure 220 may accommodate an antenna for proximity wireless communication, an antenna for wireless charging, or an antenna for magnetic secure transmission (MST) in a space that does not overlap the multi-joint hinge structure 214.

According to various embodiments, the rear plate 221b may be coupled to the outer surface of the second plate 221a or may be formed integrally with the second plate 221a depending on an embodiment. In an embodiment, the second plate 221a may be formed of a metal or polymer material, and the rear plate 221b may be formed of a material such as metal, glass, synthetic resin, or ceramic, thereby providing a decorative effect for the exterior of the electronic device 200. According to an embodiment, the second plate 221a and/or the rear plate 221b may be formed of a material that at least partially transmits light (e.g., an auxiliary display region). For example, in the state in which a portion (e.g., the second area A2) of the display 250 is received inside the second structure 220, the electronic device 200 may output visual information using the portion of the received display 250, which is received inside the second structure 220. The auxiliary display region may provide visual information output from the area received inside the second structure 220 to the outside of the second structure 220.

According to various embodiments, the third plate 221c may be formed of a metal or polymer material and coupled to the second plate 221a (e.g., a rear case), the first sidewall 223a, the second sidewall 223b, and/or the third sidewall 223c to form an inner space of the second structure 220. According to an embodiment, the third plate 221c may be referred to as a "front case", and the first structure 210, for example, the first plate 211, may slide while substantially facing the third plate 221c. In some embodiments, the first sidewall 223a may be configured as a combination of a first sidewall portion 223a-1 extending from the second plate 221a and a second sidewall portion 223a-2 formed on one edge of the third plate 221c. In another embodiment, the first sidewall portion 223 a-1 may be coupled to surround one edge of the third plate 221c, for example, the second sidewall portion 223a-2, and in this case, the first sidewall portion 223a-1 itself may form the first sidewall 223a

According to various embodiments, the support member 221d may be disposed in a space between the second plate 221a and the third plate 221c and have a planar shape formed of a metal or polymer material. The support member 221d may provide an electromagnetic shielding structure in the inner space of the second structure 220 or improve the mechanical rigidity of the second structure 220. In an embodiment, the multi-joint hinge structure 214 and/or a partial area (e.g., the second area A2) of the display 250, when received inside the second structure 220, may be positioned in a space between the second plate 221a and the support member 221d.

According to various embodiments, a printed circuit board, which is not shown, may be disposed in the space between the third plate 221c and the support member 221d. For example, the printed circuit board may be accommodated in a space inside the second structure 220, which is separated by the support member 221d from the space in which the multi-joint hinge structure 214 and/or a partial area of the display 250 is received. A processor, a memory, and an interface may be disposed on the printed circuit board. The processor may include, for example, one or more of a central processing unit, an application processor, a graphics processing unit, an image signal processor, a sensor hub processor, or a communication processor.

The memory may include, for example, volatile memory or non-volatile memory.

The interface may include, for example, a high-definition multimedia interface (HDMI), a universal serial bus (USB) interface, an SD card interface, and/or an audio interface. For example, the interface may electrically or physically connect the electronic device 200 to an external electronic device and may include a USB connector, an SD card/MMC connector, or an audio connector.

According to various embodiments, the display 250 may be a flexible display based on an organic light-emitting diode and may be at least partially deformed into a curved shape while maintaining a generally planar shape. In an embodiment, the first area A1 of the display 250 may be mounted or attached to the first face F1 of the first structure 210 to have a substantially flat shape. The second area A2 (e.g., the second area A2 in FIG. 2) (or the alpha area α) may extend from the first area A1 to be supported by or attached to the multi-joint hinge structure 214. For example, the second area A2 may extend along the sliding movement direction of the first structure 210 and may be received inside the second structure 220 together with the multi-joint hinge structure 214 so as to be at least partially deformed to a curved shape according to the deformation of the multi-joint hinge structure 214.

According to various embodiments, as the first structure 210 slides on the second structure 220, the area of the display 250 exposed to the outside may vary. The electronic device 200 (e.g., the processor) may change the area of the display 250 to be activated based on the area of the display 250 exposed to the outside. For example, in the open state or in the intermediate state between the closed state and the open state, the electronic device 200 may activate an area of the second structure 220 exposed to the outside among the total area of the display 250. In the closed state, the electronic device 200 may activate the first area A1 of the display 250 and deactivate the second area A2. In the closed state, if there is no user input for a specified time (e.g., 30 seconds or 2 minutes), the electronic device 200 may deactivate the entire area of the display 250. In some embodiments, in the state in which the entire area of the display 250 is inactive, the electronic device 200 may activate a partial area (e.g., a portion of the alpha area α) of the display 250 to provide visual information through the auxiliary display region (e.g., a portion of the second plate 221a and/or rear plate 221b made of a material that transmits light) as necessary (e.g., a notification according to a user setting or a missed call/message arrival notification).

According to various embodiments, in the open state (e.g., the state shown in FIG. 2), substantially the entire area (e.g., the first area A1 and the second area A2) of the display 250 may be exposed to the outside, and the first area A1 and the second area A2 may be disposed to form a plane. In an embodiment, even in the open state, a portion (e.g., one end) of the second area A2 may be positioned to correspond to the roller 235, and the portion of the second area A2 corresponding to the roller 235 may remain in a curved shape. For example, in various embodiments disclosed in this document, even if it is stated that "the second area A2 is disposed to form a plane in the open state", a portion of the second area A2 may remain in a curved shape, and similarly, even if it is stated that "the multi-joint hinge structure 214 and/or the second area A2 are received inside the second structure 220 in the closed state", the multi-joint hinge structure 214 and/or a portion of the second area A2 may be positioned outside the second structure 220.

According to various embodiments, the guide member, for example, the roller 235, may be rotatably mounted to the second structure 220 at a position adjacent to one edge of the second structure 220 (e.g., the second plate 221a). For example, the roller 235 may be disposed adjacent to the edge (e.g., the portion denoted by reference numeral "IE") of the second plate 221a parallel to the first sidewall 223a. Although it is not indicated by reference numeral, another sidewall may extend from the edge of the second plate 221a adjacent to the roller 235, and the sidewall adjacent to the roller 235 may be substantially parallel to the first sidewall 223a. As described above, the sidewall of the second structure 220 adjacent to the roller 235 may be formed of a material that transmits light, and a portion of the second area A2 may provide visual information by passing through the portion of the second structure 220 while being received in the second structure 220.

According to various embodiments, one end of the roller 235 may be rotatably coupled to the second sidewall 223b and the opposite end thereof may be rotatably coupled to the third sidewall 223c. For example, the roller 235 may be mounted to the second structure 220 so as to rotate about the rotation axis R perpendicular to the sliding movement direction of the first structure 210 (e.g., the direction of the arrow ① in FIG. 2 or 3). The rotation axis R may be disposed substantially parallel to the first sidewall 223a and positioned on one edge of the second plate 221a so as to be spaced apart from the first sidewall 223a. In an embodiment, the gap between the outer circumferential surface of the roller 235 and the inner surface of the edge of the second plate 221a may form an entrance through which the multi-joint hinge structure 214 or the display 250 enter the second structure 220.

According to various embodiments, when the display 250 is deformed into a curved shape, the roller 235 may maintain the radius of curvature of the display 250 to a certain degree, thereby suppressing excessive deformation of the display 250. The "excessive deformation" may indicate that the display 250 is deformed to have a small radius of curvature enough to damage pixels or signal wires included in the display 250. For example, the display 250 may be moved or deformed while being guided by the roller 235 and may be protected from damage due to the excessive deformation. In some embodiments, the roller 235 may rotate while the multi-joint hinge structure 214 or the display 250 is inserted into the second structure 220 or drawn out therefrom. For example, it may suppress friction between the multi-joint hinge structure 214 (or the display 250) and the second structure 220, thereby facilitating the multi-joint hinge structure 214 (or the display 250) to be inserted into the second structure 220 or drawn out therefrom.

According to various embodiments, the support sheet 236 may be formed of a material having flexibility and a certain degree of elasticity, for example, a material including an elastic body such that silicone or rubber, and may be mounted or attached to the roller 235 so as to be selectively wound around the roller 235 according to the rotation of the roller 235. In the illustrated embodiment, a plurality of (e.g., four) support sheets 236 may be arranged along the direction of the rotation axis R of the roller 235. The plurality of support sheets 236 may be mounted to the roller 235 at predetermined intervals between adjacent support sheets 236 and may extend in a direction perpendicular to the rotation axis R of the roller 235. In another embodiment, one support sheet may be mounted or attached to the roller 235. For example, the one support sheet may have a size and a shape corresponding to the disposition area of the support sheets 236 and the areas between the support sheets 236 in FIG. 3. As described above, the quantity, sizes, or shapes of the support sheets 236 may be appropriately varied depending on actually manufacture products. In some embodiments, the support sheet 236 may be rolled around the outer circumferential face of the roller 235 or unrolled from the roller 235 to a flat shape between the display 250 and the third plate 221c according to the rotation of the roller 235. In another embodiment, the support sheet 236 may be referred to as a "support belt", an "auxiliary belt", a "support film", or an "auxiliary film".

According to various embodiments, the electronic device 200 may include one or more elastic members 231 and 232 made of a low-density elastic body such as sponge, or brush. For example, the electronic device 200 may include a first elastic member 231 mounted to one end of the display 250, and further include a second elastic member 232 mounted to the inner surface of the edge of the second plate 221a according to an embodiment. The first elastic member 231 may be substantially disposed in the inner space of the second structure 220 and positioned to correspond to the edge of the second plate 221a in the open state (e.g., the state shown in FIG. 2). In an embodiment, the first elastic member 231 may move in the inner space of the second structure 220 according to the sliding movement of the first structure 210. When the first structure 210 moves from the closed state to the open state, the first elastic member 231 may move toward the edge of the second plate 221a. When the first structure 210 reaches the open state, the first elastic member 231 may come into contact with the inner surface of the edge of the second plate 221a. For example, in the open state, the first elastic member 231 may seal the gap between the inner surface of the edge of the second plate 221a and the surface of the display 250. In another embodiment, when moving from the closed state to the open state, the first elastic member 231 may move while being in contact (e.g., sliding contact) with the second plate 221a. For example, if a foreign substance is introduced into the gap between the second area A2 and the second plate 221a in the closed state, the first elastic member 231 may discharge the foreign substance to the outside of the second structure 220 when switching to the open state.

According to various embodiments, the second elastic member 232 may be attached to the inner surface of the edge of the second plate 221a and disposed to substantially face the inner surface of the display 250. In the closed state, the gap (e.g., disposition gap) between the surface of the display 250 and the inner surface of the edge of the second plate 221a may be substantially determined by the second elastic member 232. According to an embodiment, in the closed state, the second elastic member 232 may come into contact with the surface of the display 250, thereby substantially sealing the disposition gap. According to an embodiment, since the second elastic member 232 is formed of a low-density elastic body such as a sponge, or brush, it may not damage the surface of the display 250 even in direct contact with the display 250. According to another embodiment, as the first structure 210 gradually moves to the open state, the disposition gap may be increased. For example, the second area A2 may be gradually exposed to the outside of the second structure 220 while the display 250 does not substantially come into contact with or rub against the second elastic member 232. When the first structure 210 reaches the open state, the first elastic member 231 may come into contact with the second elastic member 232. For example, the first elastic member 231 and the second elastic member 232 may seal the disposition gap in the open state, thereby blocking inflow of foreign substances.

According to various embodiments, the electronic device 200 may further include guide rail(s) 237 and/or actuating member(s) 238. The guide rail(s) 237 may be mounted to the second structure 220, for example, the third plate 221c, to guide the sliding movement of the first structure 210 (e.g., the first plate 211 or the slide plate). The actuating member(s) 238 may include a spring or a spring module that provides an elastic force in a direction in which both ends thereof go far away from each other. One end of the actuating member(s) 238 may be rotatably supported by the second structure 220, and the opposite end thereof may be rotatably supported by the first structure 210. When the first structure 210 slides, both ends of the actuating member(s) 238 may be located closest to each other (hereinafter, referred to as a "closest point") at one point between the closed state and the open state. In a section between the closest point and the closed state, the actuating member(s) 238 may provide an elastic force to the first structure 210 in a direction of moving toward the closed state, and in a section between the closest point and the open state, the actuating member(s) 238 may provide an elastic force to the first structure 210 in a direction of moving toward the open state.

In the following detailed description, the elements capable of being easily understood through the preceding embodiments will be given the same reference numerals, or reference numerals thereof will be omitted, and detailed descriptions thereof may also be omitted. Electronic devices (e.g., the electronic device 101 in FIG. 1 and the electronic device 200 in FIGS. 2 to 4) according to various embodiments disclosed in this document may be implemented by a selective combination of configurations of different embodiments, and a configuration of an embodiment may be replaced by a configuration of another embodiment. For example, it should be noted that the disclosure is not limited to specific figures or embodiments.

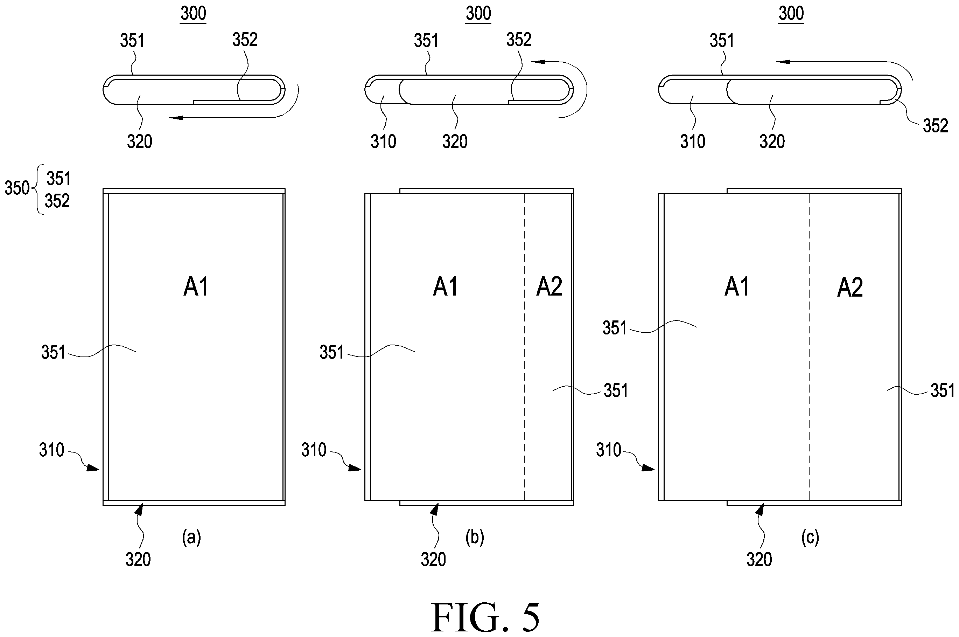

FIG. 5 is a diagram showing the behavior of a display 350 in a slide-in operation and a slide-out operation of a first structure 310 attached to a second structure 320 according to various embodiments of the disclosure.

A plurality of portions (or a plurality of areas) of a display 350 according to various embodiments of the disclosure will be described with reference to FIG. 5. Referring to FIG. 5, a display 350, a first structure 310, and a second structure 320 may be partially or entirely the same as the configurations of the display 250, the first structure 210, and the second structure 220 in FIGS. 2 to 4.

Referring to (a), (b), and (c) in FIG. 5, the display 350 of an electronic device 300 (e.g., the display 250 in FIGS. 2 to 4) may include a first portion 351 and a second portion 352. Here, the first portion 351 and the second portion 352 are divided for convenience of description and are not intended to be functionally or physically separate from each other.

According to another embodiment, the display 350 may include a first area A1 and a second area A2. Here, it should be noted that the first area A1 and the second area A2 are also divided for the convenience of description and are not required to be functionally or physically separated from each other. According to various embodiments of the disclosure, the portions referred to as "a first portion and a second part" of the display or the portions referred to as "a first area and a second area" may be substantially the same as or similar to each other.

The display 350 may include a first portion 351 that is an area visible from the outside through at least one face of the housing 301. In addition, the display 350 may include a second portion 352 that is at least partially surrounded by a housing and not visible from the outside. When the first portion 351 is extended based on a slide-out operation of the first structure 310, the second portion 352 may be reduced. On the other hand, when the first portion 351 is reduced based on a slide-in operation of the first structure 310, the second portion 352 may be extended. As an example, in (b) and (c) of FIG. 5, the first portion 351 of the electronic device 300 may be extended based on the slide-out operation. On the other hand, the second portion 352 may be reduced based on the slide-out operation of the first structure 351.

The display 350 may include a first area A1 that is a default use area in the state in which the first structure 310 is received inside the second structure 320, and a second area A2 that is an extended area based on the sliding movement of the first structure 310. The first area A1 may be an area visible from the outside in the state in which the first structure 310 is received inside the second structure 320 such that the display is not extended. The second area A2 may be at least partially surrounded by a housing in the state in which the first structure 310 is received inside the second structure 320 so as not to be visible from the outside, and may be visible from the outside through at least one face of the housing when the first structure is drawn from the second structure 320 by the slide-out operation. In the slide-out operation of the first structure 310, the first area A1 and the second area A2 (e.g., a portion of the second area A1) may configure a first portion 351 that is an area visible from the outside through at least one face of the housing.

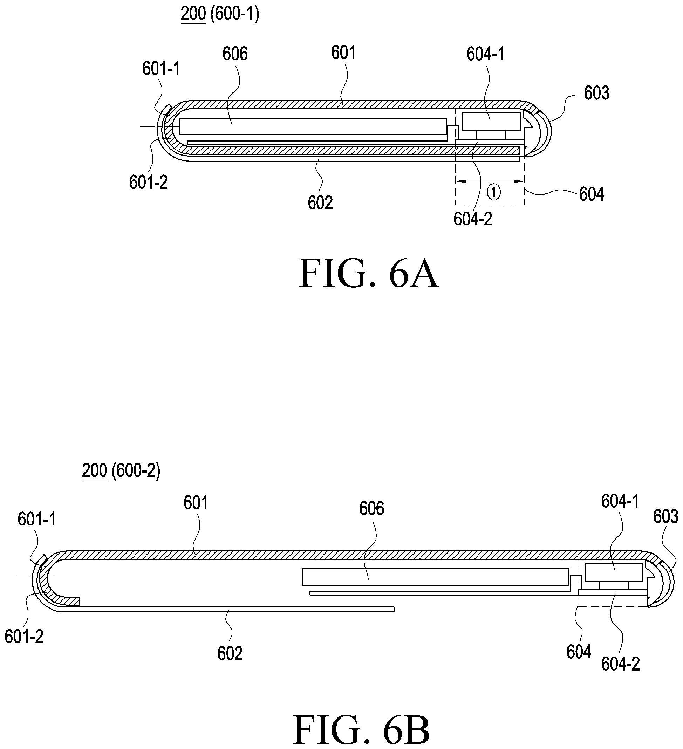

FIGS. 6A to 6D are diagrams illustrating the state of an electronic device in a slide-in operation and a slide-out operation of a first structure, when viewed in one direction, according to various embodiments of the disclosure.

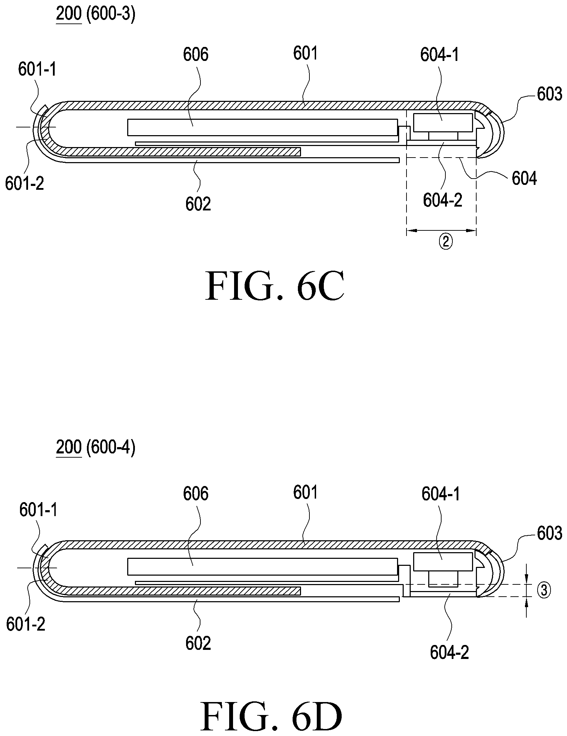

The electronic device 200 in FIGS. 6A to 6D may include a display 601, a first structure 602, a second structure 603, a first component assembly 604, and a printed circuit board 606. The display 601, the first structure 602, and the second structure 603 in FIGS. 6A and 6D may be partially or entirely the same as the configurations of the display 250, the first structure 210, and the second structure 220 in FIGS. 2 to 4.

Referring to FIG. 6A, a state 600-1 in which the electronic device 200 is closed is schematically shown. According to an embodiment, the display 601 of the electronic device 200 may be a flexible display that is bendable and includes a first display region 601-1 and a second display region 601-2. The first display region 601-1 may be defined as an area visible from the outside through at least one face of the housing, and the second display region 601-2 may be defined as an area that is at least partially surrounded by the first structure 602 so as not to be visible from the outside. The first display region 601-1 of the display 601 may be fixed in contact with the second structure 603 and may extend in the opposite direction of the second structure 603 so as to be at least partially received inside the first structure 602.

According to an embodiment, a printed circuit board 606 and a first component assembly 604 that is operatively coupled with the printed circuit board 606 may be positioned between the first display region 601-1 and the second display region 601-2 of the display 601 of the electronic device 200. According to an embodiment, the first component assembly 604 may include an electrical component 604-1 and a window glass 604-2. The electrical component 604-1 may be, for example, a camera module. According to an embodiment, the electrical component 604-1 may include one or more lenses and image sensors. According to an embodiment, the distance between the first display region 601-1 of the display 601 and the electrical component 604-1 may be within about 3 mm. According to an embodiment, the electrical component 604-1 may obtain an image of the outside (e.g., an object) positioned in front of the electronic device 200 using light (light source) passing through a window glass 604-2, the second area 601-2 of the display, and the first structure 602. For example, at least a portion of the window glass 604-2, the second area 601-2 of the display, and the first structure 602 may include a transparent area, and the electrical component 604-1 may obtain an image using light (light source) passing through the transparent area.

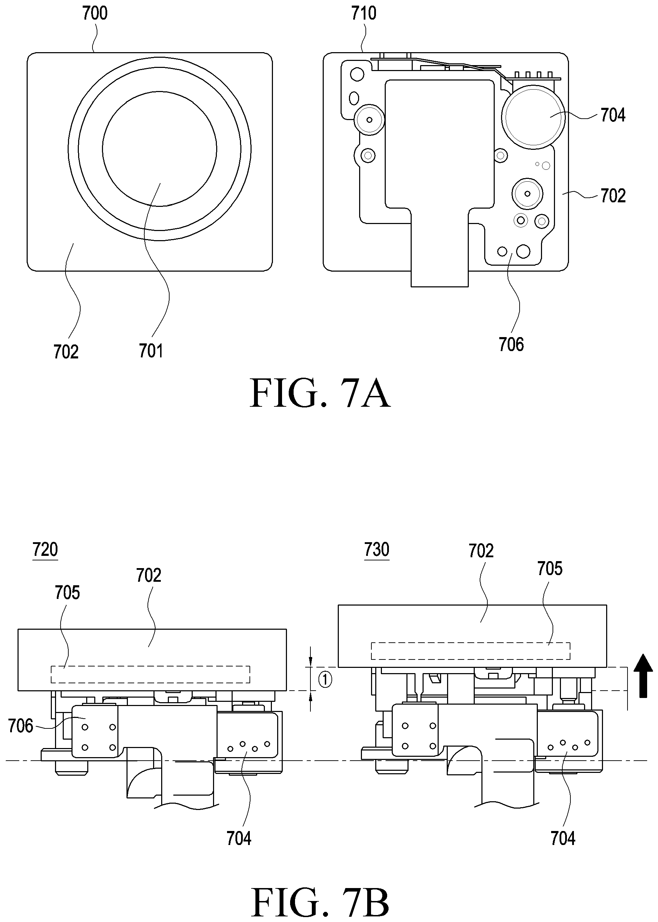

The electrical component 604-1 will be described in detail with reference to FIGS. 7A to 9.

According to the embodiment of the disclosure, in the case where the printed circuit board 606 of the electronic device 200 in the closed state and the first component assembly 604 operatively coupled with the printed circuit board 606 are positioned between the first display region 601-1 and the second display region 601-2 of the display 601, the size of the display may be extended. For example, the size of the display may be extended by the length (1).

Referring to FIG. 6B, a state 600-2 in which the electronic device 200 is open is schematically shown. The first structure 602 in FIG. 6B is in the state of being maximally moved in the opposite direction of the second structure 603 by the slide-out operation. According to an embodiment, in the open state of the electronic device 200, the first display region 601-1 of the display 601 may be enlarged to have a maximum area exposed to the outside, and the second display region 601-2 of the display may be reduced to have a minimum area exposed to the outside. The printed circuit board 606 and the first component assembly 604 operatively coupled with the printed circuit board 606, like the printed circuit board 606 and the first component assembly 604 in FIG. 6A, may be operatively coupled with the second structure 603 and may be positioned between the first region 601-1 of the display 601 and the second region 601-2 of the display 601. According to an embodiment, the first component assembly 604 may include a camera module, and the first component assembly 604 may obtain an image of the outside (e.g., an object) using an image sensor in the open state of the electronic device 200.

Referring to FIGS. 6C and 6D, a partially enlarged state 1 (600-3) (hereinafter, state 1) and a partially enlarged state 2 (600-4) of the electronic device 200 are schematically shown. Referring to FIG. 6C, the first structure 602 of the electronic device is in the state of being partially moved in the opposite direction of the second structure 603, based on the slide-out operation. For example, the first structure 602 is moved by ②. According to an embodiment, the first component assembly 604 may be visible from the outside in state 1 (600-3). The first component assembly 604 may include the electrical component 604-1, and the electrical component 604-1 may include, for example, a camera module. According to an embodiment, in state 1 (600-3), the electrical component 604-1 may obtain an image of the outside (e.g., an object) using the lens and image sensor included in the electrical component 604-1. According to an embodiment, the electronic device 200 may include a software (e.g., a camera application) that automatically drives an application for obtaining an image using the electrical component 604-1 in state 1 (600-3)/or state 2 (600-4). According to another embodiment, when the electronic device 200 enters the closed state 600-1 in FIG. 6A in state 1 (600-3)/or state 2 (600-4), it may terminate the camera application. For example, based on a change in the state of the display 601, the electronic device 200 may not perform an operation of obtaining an image in relation to the electrical component 604-1, and automatically terminate the camera application without a user input (e.g., a touch input).

Referring to FIG. 6D, a partially enlarged state 2 (600-4) of the electronic device 200 is shown. According to an embodiment, in the partially enlarged state 1 (600-3), the electrical component 604-1 of the first component assembly 604 may be protruded in the opposite direction of the first display region 601-1 in a pop-up manner for lens focusing. For example, at least a portion (e.g., the lens assembly 701 in FIG. 7A) of the electrical component 604-1 may be protruded by ③.

FIGS. 7A to 7B are enlarged schematic diagrams of an electrical component 604-1 in FIGS. 6A to 6D according to various embodiments.

Referring to FIGS. 7A to 7B, a front face 700 of the electrical component and a rear face 710 of the electrical component are schematically shown. Referring to FIG. 7A, the electrical component may include a lens assembly 701, a support 702, a driving system 706, an image sensor 705, and a driver 704 extending from the driving system 706. According to an embodiment, the front face 700 of the electrical component may include a lens assembly 701 and a support 702. The lens assembly 701 may include at least one or more lenses. According to an embodiment, the rear face 710 of the electrical component may include an image sensor 705, a driving system 704, and a driver 706. The image sensor 705 may be disposed on the rear face of the lens assembly 701 and may capture an image of the outside (e.g., an object) using at least one or more lens of the lens assembly 701. According to an embodiment, a first component assembly (e.g., the first component assembly 604 in FIGS. 6A to 6D) may extend the drive system 704 using the driver 706, thereby performing an operation (e.g., a pop-up operation) of transforming at least a portion of the electrical component.

FIG. 7B is a diagram for schematically illustrating an operation of transforming at least a portion of the electrical component (e.g., a pop-up operation) using the driver 706 in FIG. 7A. According to an embodiment, the electrical component 720 or 730 may include a support 702 operatively coupled with the lens assembly (not shown), a driving system 706, and a driver 704 extending from the driving system 706. According to an embodiment, the driving system 706 of the electrical component 720 is in the state of not being extended before performing the pop-up operation. The electrical component 730 may perform the pop-up operation by extending the driving system 706 using the driver 704. For example, the driving system 706 may be extended by the length (1). According to an embodiment, the electronic device (e.g., the electronic device 101, 200, or 300) may perform the pop-up operation using various mechanism structures. For example, the electronic device 101, 200, or 300 may perform the pop-up operation using a step motor.

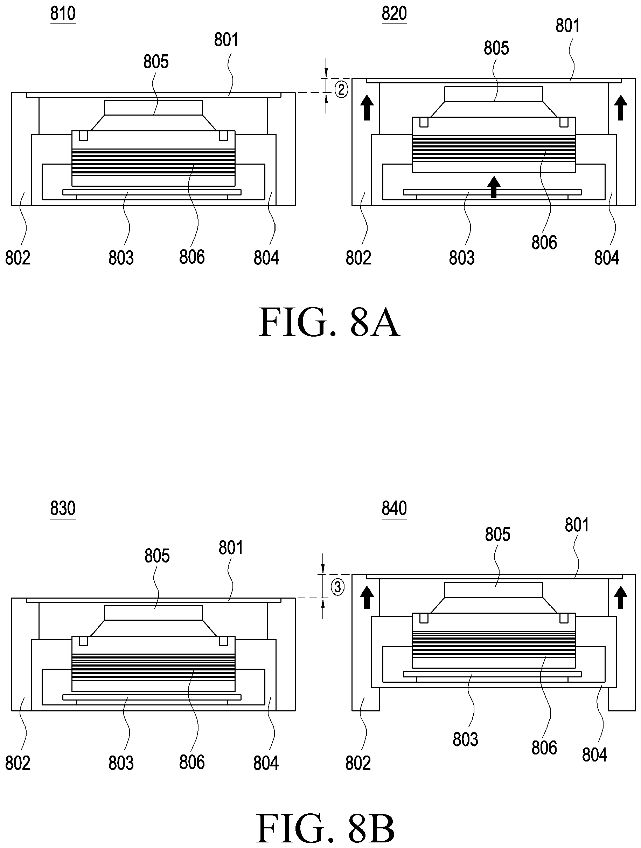

FIGS. 8A and 8B are diagrams illustrating various methods of transforming at least a portion of the electrical component (e.g., a pop-up operation) in FIGS. 7A and 7B. Referring to FIGS. 8A and 8B, a first component assembly 810, 820, 830, or 840 (e.g., the first component assembly 640 in FIGS. 6A to 6D) may include an electrical component 806, a window glass 801, a first support 802, an image sensor 803, and a second support 804. The first component assembly 810, 820, 830, or 840, the electrical component 806, and the window glass 801 in FIGS. 8A and 8B may be partially or entirely the same as the configurations of the first component assembly 604, the electrical component 604-1, 720, or 730, the window glass 604-2 in FIGS. 6A to 7B.

FIG. 8A shows a first method among the methods of transforming the electrical component (e.g., a pop-up operation). The first method may be referred to as, for example, an auto-focus type. Referring to FIG. 8A, the window glass 801 and the electrical component 806 may be positioned between the first supports 802. According to an embodiment, the electrical component 806 may include an image sensor 803 and a camera window 805 disposed above the image sensor 803. The camera window 805 may be disposed between the second supports 804. According to an embodiment, the electrical component 806 may perform a pop-up operation using the camera window 805 for lens focusing. According to an embodiment, the electrical component 806 may cause the camera window 805 inside the electrical component 806 to protrude in the opposite direction of the image sensor 803 for lens focusing. As an example, the camera window 805 may be protruded by the length (2). According to an embodiment, the first support 802 may be extended based on the pop-up operation of the electrical component 806, and the window glass 801 positioned between the first supports 802 may be protruded. As an example, the first support 802 may be protruded by the length (2). In the case of performing lens focusing using the first method, the image sensor 803 may be fixed, and only the camera window 805 may be protruded in the opposite direction of the image sensor 803.

FIG. 8B illustrates a second method among the methods of transforming the electrical component (e.g., a pop-up operation). The second method may be referred to as, for example, a fixed focus type. The configuration of the first component assembly in FIG. 8B may be partially or entirely be the same as the configuration of the first component assembly in FIG. 8A. According to an embodiment, the entire electrical component 806 may be protruded in the direction of the window glass 801 for lens focusing. As an example, the entire electrical component 806 may be protruded by the length ③. According to an embodiment, the first support 802 may be extended based on the pop-up operation of the electrical component 806, and the window glass 801 positioned between the first supports 802 may be protruded. As an example, the first support 802 may be protruded by the length ③. In the case of performing lens focusing using the second method, the camera window 805 and the image sensor 803 inside the electrical component 806 may simultaneously/sequentially protrude in the direction of the window glass 801.

According to another embodiment, the electrical component 806 may include a lens assembly (e.g., the lens assembly 701 in FIG. 7A) and fix the distance between the electrical component 806 and the upper surface of the image sensor 803, and the focus of the electrical component 806 may be adjusted according to a change in the distance between the lens assembly of the electrical component 806 and the upper surface of the image sensor 803.

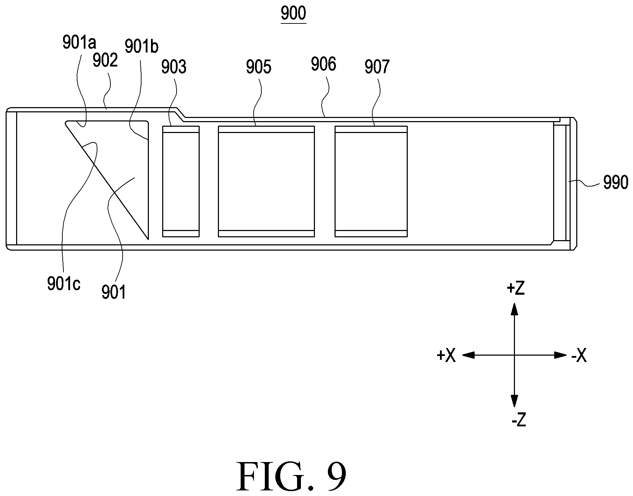

FIG. 9 illustrates a lens assembly used in a third method among the methods of transforming an electrical component (e.g., a pop-up operation).

As an example, the third method is a method using an optical imaging system. The lens assembly in FIG. 9 may be partially or entirely the same as the configuration of the lens assembly in FIGS. 6A to 8B. Referring to FIG. 9, an optical imaging system used in a third method among the pop-up operation methods of electrical components is schematically shown.

Referring to FIG. 9, an optical imaging system 900 may include a reflective member 901, a camera window 902, a first lens group 903, a second lens group 905, a third lens group 907, an image sensor 990, and a camera housing 906 capable of accommodating the image sensor 990.

According to an embodiment, the reflective member 901 may refract light. According to an embodiment, the reflective member 901 may refract at least some of the light, which is transferred from the outside of the electronic device (e.g., the electronic device 200 in FIG. 2) to the camera window 902 of the optical imaging system 900 in a second direction (e.g., the -Z direction), in a third direction (e.g., the -X direction) toward the image sensor 990. For example, the reflective member 901 may include a first reflective member face 901a facing in a fourth direction (e.g., the +Z direction), a second reflective member face 901b facing the first lens group 910 and/or the image sensor 990, and a third reflective member face 901c extending from the first reflective member face 901a to the second reflective member face 901b. At least some of the light incident on the first reflective member face 901a may be reflected from the third reflective member face 901c to be transferred to the second reflective member face 901b. According to an embodiment, the reflective member 901 may be in a prism structure.

According to an embodiment, the first lens group 903 may include at least one lens. According to an embodiment, the first lens group 903 may be sequentially arranged in a direction from the reflective member 901 toward the image sensor 990 and the second lens group 905. According to an embodiment, the first lens group 903 may be fixed to the second camera housing 906.

According to an embodiment, the second lens group 905 may include at least one lens. According to an embodiment, the second lens group 905 may be sequentially arranged in a direction from the first lens group 903 toward the image sensor 990 and/or the third lens group 907.

According to an embodiment, the second lens group 905 may have positive (+) combined refractive power. For example, the second lens group 905 may concentrate at least some of light incident on the second lens group 905.

According to an embodiment, the third lens group 907 may include at least one lens. According to an embodiment, the third lens group 907 may be sequentially arranged in a direction from the second lens group 905 toward the image sensor 990.

According to an embodiment, the third lens group 907 may have negative (-) combined refractive power. For example, the third lens group 907 may spread at least some of the light incident on the third lens group 907.

According to some embodiments, the electronic device (e.g., the electronic device 200 in FIG. 2) may implement lens focusing using the second lens group 905 and/or the third lens group 907. As an example, the optical imaging system 900 may include an actuator (not shown) connected to the second lens group 905 and/or the third lens group 907, and the actuator, based on information obtained from a sensor module (e.g., a gyro sensor, or the sensor module 176 in FIG. 1), may move the second lens group 905 and/or the third lens group 907, enabling the electrical component (e.g., the electrical component 604-1 in FIGS. 6A to 6D) to perform lens focusing. As an example, the electronic device 200 may move the second lens group 905 and the third lens group 907 included in the lens assembly 900 inside the electrical component without moving the electrical component 604-1, thereby performing the lens focusing.

According to another embodiment, the reflective member may be configured to be rotatable. As an example, as the camera module (e.g., the electrical component 604-1 in FIG. 6A) is compressed, the reflective member 901 may be rotated substantially flat, thereby reducing the height of the reflective member 901 and the height of the camera module, and if at least a part of the camera module moves (e.g., vertical movement) in a fourth direction (e.g., the +Z direction) to protrude from the electronic device (e.g., the electronic device 200 in FIG. 2), the lens focusing may be performed by rotating the reflective member 901.

According to an embodiment, an electronic device (e.g., the electronic device 200 in FIG. 6A) may include a first housing (e.g., the first structure 602 in FIG. 6A), a second housing (e.g., the second structure 602 in FIG. 6A) configured to receive at least a portion of the first housing and guide a sliding movement of the first housing, a flexible display (e.g., the display 601 in FIG. 6A) including a first display region (e.g., the first region 601-1 of the display in FIG. 6A) disposed in the first housing and a second display region (e.g., the second region 601-2 of the display in FIG. 6A) extending to the first display region, the second display region configured to be movable inside or outside the second housing, based on the sliding movement of the first housing, and a first component assembly (e.g., the first component assembly 604 in FIG. 6A) at least partially mounted inside the first housing and including a lens assembly (e.g., the electrical component 604-1 in FIG. 6A) configured to move in a direction perpendicular to the sliding movement direction in response to the sliding movement of the first housing.

According to an embodiment, the lens assembly may be positioned to be received inside the first housing or exposed to the outside according to slide-in and slide-out operations of the flexible display.

According to an embodiment, the first component assembly may be positioned between the first display region and the second display region in a slide-in state of the flexible display.

According to an embodiment, the first component assembly may further include a window glass (e.g., the window glass 604-1 in FIG. 6A) and may be configured to be movable, in response to movement of the lens assembly in a vertical direction, in the same direction.

According to an embodiment, the first component assembly may further include a camera module (e.g., the electrical component 604-1 in FIG. 6A) including an image sensor.

According to an embodiment, the first housing and the second housing may be formed of a transparent material.

According to an embodiment, the camera module may be configured to capture an image of an external object using the image sensor in a slide-in state of the flexible display.

According to an embodiment, software may be configured to automatically turn on a camera application when the flexible display partially slides out.

According to an embodiment, software may be configured to forcibly terminate a camera application when performing a slide operation from a slide-out state to a slide-in state of the flexible display.

According to an embodiment, the first component assembly may include a driver (e.g., the driver 704 in FIG. 7B) configured to move the first component assembly in a direction perpendicular to the sliding movement direction.

According to an embodiment, when the first component assembly moves in the direction perpendicular to the sliding movement direction, the image sensor may be fixed, and only the lens assembly and window glass may be configured to move in the vertical direction.

According to an embodiment, when the first component assembly moves in the direction perpendicular to the sliding movement direction, the image sensor, the lens assembly, and the window glass may be configured to move in the vertical direction.

According to an embodiment, the lens assembly may include at least one reflective member (e.g., the reflective member 901 in FIG. 9), and a first lens group (e.g., the first lens group 903 in FIG. 9), a second lens group (e.g., the second lens group 905 in FIG. 9), and a third lens group (e.g., the third lens group 907 in FIG. 9) arranged in sequence toward the image sensor, and the second lens group and the third lens group may be configured to slide relative to the first lens group.

According to an embodiment, the second lens group may have positive (+) refractive power, and the third lens group may have negative (-) refractive power.

According to an embodiment, the second lens group may be configured to move in a second direction toward the first lens group when zooming out and move in a third direction toward the image sensor when zooming in.

According to an embodiment, the reflective member may include a prism.

According to an embodiment, the first housing and the second housing may include curved surfaces.

According to an embodiment, the image sensor included in the first component assembly may be configured to face the first display region, and the lens assembly included in the first component assembly may be configured to face the second display region.

According to an embodiment, a circuit board (e.g., the main printed circuit board 606 in FIG. 6A) mounted on the second housing may be configured to be electrically connected to the first component assembly.

According to an embodiment, the circuit board may be positioned between the first display region and the second display region in a slide-in state of the flexible display.

## Claims

1. An electronic device comprising:
a first housing;
a second housing configured to receive at least a portion of the first housing and guide a sliding movement of the first housing;
a flexible display comprising a first display region disposed in the first housing and a second display region extending to the first display region, the second display region configured to be movable inside or outside the second housing, based on the sliding movement of the first housing; and
a first component assembly at least partially mounted inside the first housing and comprising a lens assembly configured to move in a direction perpendicular to the sliding movement direction in response to the sliding movement of the first housing.

2. The electronic device of claim 1, wherein the lens assembly is positioned to be received inside the first housing or exposed to the outside according to slide-in and slide-out operations of the flexible display.

3. The electronic device of claim 1, wherein the first component assembly is positioned between the first display region and at least a portion of the second display region in a slide-in state of the flexible display.

4. The electronic device of claim 1, wherein the first component assembly further comprises a window glass and configured to be movable, in response to movement of the lens assembly in a vertical direction, in the same direction.

5. The electronic device of claim 1, wherein the first component assembly further comprises a camera module comprising an image sensor.

6. The electronic device of claim 5, wherein the first housing and the second housing are formed of a transparent material.

7. The electronic device of claim 6, wherein the camera module is configured to capture an image of an external object using the image sensor in a slide-in state of the flexible display.

8. The electronic device of claim 5, comprising software configured to automatically turn on a camera application when the flexible display partially slides out.

9. The electronic device of claim 5, comprising software configured to forcibly terminate a camera application when a slide operation is performed from a slide-out state to a slide-in state of the flexible display.

10. The electronic device of claim 5, wherein the first component assembly comprises a driver configured to move the first component assembly in a direction perpendicular to the sliding movement direction in response to the sliding movement of the first housing.

11. The electronic device of claim 10, wherein, when moving in the direction perpendicular to the sliding movement direction, the image sensor is fixed, and the lens assembly and a window glass are configured to move in the direction perpendicular to the sliding movement direction in the first component assembly.

12. The electronic device of claim 10, wherein, when moving in the direction perpendicular to the sliding movement direction, the image sensor, the lens assembly, and a window glass are configured to move in the direction perpendicular to the sliding movement direction in the first component assembly.

13. The electronic device of claim 1, wherein the first housing and the second housing comprise curved surfaces.

14. The electronic device of claim 3, wherein the image sensor included in the first component assembly configured to face the first display region, and
wherein the lens assembly included in the first component assembly configured to face the second display region.

15. The electronic device of claim 1, comprising a circuit board mounted on the second housing, configured to be electrically connected to the first component assembly, and positioned between the first display region and the second display region in a slide-in state of the flexible display.
